# EUROPÄISCHE PATENTSCHRIFT

(11) **EP 1 517 157 B1**
(45) Veröffentlichungstag und Bekanntmachung des Hinweises auf die Patenterteilung: **18.07.2007**
(21) Anmeldenummer: 04104108.8
(22) Anmeldetag: 26.08.2004
(51) Int. Cl.: G01S 15/93, G01S 7/527, G01S 15/87

(54) **Verfahren und Vorrichtung zur Abstandsmessung**
Method and apparatus for measuring distance
Procédé et dispositif pour mesurer des distances

(30) Priorität: 18.09.2003 DE 10343175
(43) Veröffentlichungstag der Anmeldung: 23.03.2005
(73) Patentinhaber: ROBERT BOSCH GMBH, 70442 Stuttgart (DE)
(72) Erfinder: Herder, Bjoern, 14612, Falkensee (DE)

(56) Entgegenhaltungen:
- EP-A- 1 058 126
- WO-A-02/095443
- WO-A-03/016941
- WO-A-03/081278
- DE-A- 10 049 906
- DE-A- 19 711 467
- DE-A- 19 802 724
- US-A1- 2003 222 778

## Beschreibung

Die Erfindung betrifft ein Verfahren zur Abstandsmessung mit mindestens zwei berührungslosen Abstandssensoren, insbesondere mit Ultraschallsensoren, die jeweils einen Sender zur Aussendung von Messimpulsen und einen Empfänger zum Empfangen von Messimpulsechos haben, wobei aus der Zeitdifferenz zwischen Messimpuls und empfangenem Messimpulsecho der Abstand zu einem den Messimpuls reflektierenden Hindernis bestimmt wird.

Die Erfindung betrifft weiterhin eine Messeinrichtung zur Abstandsmessung mit mindestens zwei berührungslosen Abstandssensoren, insbesondere mit Ultraschallsensoren, die jeweils einen Sender zur Aussendung von Messimpulsen und einen Empfänger zum Empfangen von Messimpulsechos haben, und mit einer an die Abstandssensoren angeschlossenen Steuer- und Auswerteeinheit.

Entsprechende Abstandsmessungen werden insbesondere zur Einparkhilfe in Kraftfahrzeugen eingesetzt, um Hindernisse in der Umgebung des Fahrzeugs insbesondere vor bzw. hinter dem Fahrzeug zu erkennen und optisch und/oder akustisch anzuzeigen. Hierzu werden Abstandssensoren in das Fahrzeug eingebaut, die mit Hilfe von Ultraschall das Vorhandensein von Objekten berührungslos detektieren und auch den Abstand zu den Objekten messen können. Die Ultraschallsensoren senden ein Messsignal aus und es wird die Laufzeit gemessen, bis das vom Hindernis reflektierte Messsignalecho wieder bei dem Empfänger des Abstandssensors eintrifft. Die Laufzeit wird dann in einen Abstand umgerechnet. Der Fahrer wird über den Abstand zwischen Fahrzeug und Hindernis informiert, wodurch u. a. ein komfortableres Einparken und Rangieren, eine Nutzung engerer Parklücken auch für ungeübte Fahrer und die Vermeidung von Einparkunfällen ermöglicht wird.

Aus der DE 100 49 906 A1 ist eine Sensoranordnung mit einem Puls-Echo-Radar bekannt, bei der ein Trägersignal eines Mikrowellen-Sendeoszillators pulsförmig mit einer vorgegebenen Pulswiederholrate in einem Sendefenster ausgesendet wird. Hierbei ist es bekannt, mehrere Sender-/Empfängerbaugruppen zu verwenden. Um eine Kreuzechoauswertung durchzuführen, erfolgt eine stochastische Codierung der ausgesendeten Sendesignale, wobei die Kreuzechoauswertung dann möglich ist, wenn die stochastischen Pulsfolgen des Sendesignals am jeweiligen Ausgang dem jeweiligen Empfangszweig am Eingang bekannt sind.

Aus der DE 198 02 724 A1 ist eine Überwachungseinrichtung für Signal-Echo-Sensoren bekannt. Das ausgesendete Signal besitzt eine charakteristische Signalform und wird gemeinsam mit dem Echosignal über ein in der Auswerteeinheit integriertes adaptives Filter zur Bestimmung eines Abstandes des Gegenstandes von der Sendeeinheit ausgewertet.

Herkömmlicherweise wird, nachdem ein Hindernis erkannt wurde, die Messung in zeitlich möglichst kurzem Abstand wiederholt, um das Ergebnis zu verifizieren. Dabei ist jedoch zu berücksichtigen, dass die benachbarten Abstandssensoren des sendenden Abstandssensors ebenfalls als Empfänger dienen. Hierdurch können reflektierende Messimpulsechos aus einem breiteren räumlichen Bereich gewonnen werden. Die empfangenen Messimpulsechos werden als Direktecho bezeichnet, wenn ein Abstandssensor einen selbst ausgesendeten Messimpuls durch Direktreflexion wieder empfängt. Weiterhin sind jedoch noch Kreuzechos zu beobachten, die von einem Abstandssensor durch Kreuzreflexion empfangene Messimpulse direkt benachbarter Abstandssensoren sind.

Wenn mehrere Abstandssensoren nahezu gleichzeitig senden, treten unter Umständen noch Übersprechechos auf, die von einem Abstandssensor empfangene kreuzreflektierte Messimpulse sind, die von einem anderen Abstandssensor als der empfangende Abstandssensor oder den dem empfangenden Abstandssensor direkt benachbarten Abstandssensoren stammen.

Um nun gegenseitige Störungen der Abstandssensoren zu verhindern bzw. die empfangenen Messimpulsechos einzelnen Sendern der Abstandssensoren zuordnen zu können, dürfen nicht alle Abstandssensoren gleichzeitig senden. Bei den üblicherweise pro Fahrzeugseite eingesetzten vier bis sechs Abstandssensoren, insbesondere bei sechs Abstandssensoren im Frontbereich zur besseren Seitenabsicherung, wird die Reaktionszeit durch die zeitlich nacheinander durchzuführende Abstandsmessung der einzelnen Abstandssensoren nachteilig erhöht. Daher werden Sendegruppen gebildet innerhalb der bis zu zwei Abstandssensoren gleichzeitig senden. Bei der Aufteilung der Sendegruppen liegen zwischen zwei Sendern jeweils drei andere Abstandssensoren, um die Zuordnung der empfangenen Messimpulsechos zu gewährleisten.

Bei erhöhten Messreichweiten besteht zusätzlich die Gefahr, dass innerhalb der Sendegruppen, die für kurze Messreichweiten ausgelegt sind, Störungen, sogenanntes Übersprechen, auftreten. Es ist daher bislang notwendig, die Messreichweite zu beschränken oder die Messimpulse durch die Abstandssensoren einzeln nacheinander auszusenden, was die Reaktionszeit des Messsystems nachteilig beeinflusst.

Aufgabe der Erfindung ist es daher, ein verbessertes Verfahren zur Abstandsmessung sowie eine verbesserte Messeinrichtung zur Abstandsmessung zu schaffen.

Die Aufgabe wird mit dem gattungsgemäßen Verfahren erfindungsgemäß gelöst durch
- zeitlich versetztes Ausenden von Messimpulsen alternierend durch die mindestens zwei Abstandssensoren für eine Erstmessung,
- Empfangen der Messimpulsechos durch die Abstandssensoren, und
- nochmaliges zeitlich versetztes Aussenden von Messimpulsen für eine Verifikationsmessung mit gegenüber der Erstmessung geändertem zeitlichen Versatz.

Durch das wechselseitig zeitversetzte Aussenden von Messimpulsen der Abstandssensoren einer Sendegruppe wird den Übersprechechos innerhalb der Sendegruppe ein künstlicher Laufzeitunterschied zwischen der Erstmessung und der Verifikations- bzw. Wiederholungsmessung überlagert. Durch diesen Laufzeitunterschied der Messim-pulsechos zwischen den beiden Messungen können die Übersprechechos dann ausgefiltert werden. Dies hat zudem den Vorteil, dass die Messreichweite erhöht werden kann, da eine Fehlinterpretation des Messempfangssignals nicht mehr möglich ist. Beim zeitlich versetzten Senden bleiben die Laufzeiten der direkt reflektierten Messimpulsechos und der direkten Kreuzechos erhalten, die von dem empfangenden Abstandssensor direkt benachbarten Abstandssensoren stammen. Die Laufzeiten der kreuzreflektierenden übersprechenden Messim-pulsechos (Übersprechechos), die von anderen Abstandssensoren stammen, als der empfangende Abstandssensor oder den dem empfangenden Abstandssensor direkt benachbarten Abstandssensoren, sind unterschiedlich und können herausgefiltert werden. Daher ist es nicht mehr notwendig, dass mindestens drei Sensoren zwischen den gleichzeitig sendenden Abstandssensoren liegen, so dass die Sendegruppen neu aufgeteilt werden können. Dies führt dazu, dass vorteilhafterweise insbesondere am Front und Heck eines Kraftfahrzeuges jeweils eine Sendegruppe eingespart werden kann und die Systemreaktionszeit verbessert wird.

Die Aufgabe wird weiterhin mit der gattungsgemäßen Messeinrichtung gelöst, bei der die Steuer- und Auswerteeinheit beispielsweise durch Programmierung eines Rechners, wie beispielsweise eines Bordcomputers eines Kraftfahrzeugs, zur Durchführung des Verfahrens ausgebildet ist.

Der zeitliche Versatz beträgt vorzugsweise nur einen Bruchteil der Zeit, die ein Abstandssensor für eine Abstandsmessung benötigt. Die Reaktionszeit des Systems wird durch den zeitlichen Versatz somit nicht beeinträchtigt. Vielmehr wird erreicht, dass die Abstandssensoren ihre Messungen wesentlich schneller als bislang möglich nacheinander durchführen können.

Der geänderte zeitliche Versatz kann derart sein, dass die Reihenfolge der Aussendungen der Messimpulse durch die Abstandssensoren bei der Verifikationsmessung umgekehrt zu der Reihenfolge bei der Erstmessung ist.

Der geänderte zeitliche Versatz kann aber auch so sein, dass die Versatzzeit zwischen den aufeinanderfolgenden Aussendungen der Messimpulse für die Verifikationsmessung unterschiedlich zur Versatzzeit für die Erstmessung ist.

Vorzugsweise wird die Versatzzeit zwischen dem zeitlich versetzten Aussenden aufeinanderfolgender Messimpulse in Abhängigkeit von der Zeitdauer zwischen Erstmessung und Verifikationsmessung gewählt. Dabei ist zu beachten, dass durch den zeitlichen Versatz dem Übersprechecho eine größere künstliche zeitliche Verschiebung überlagert werden muss, als ein reales Hindernis in der entsprechenden Zeit beispielsweise durch Bewegung des Kraftfahrzeugs relativ zum Abstandssensor zurückgelegt haben kann.

Zur Abstandsmessung in Kraftfahrzeugen, insbesondere zur Einparkhilfe sollte der zeitliche Versatz daher in Abhängigkeit von der Fahrzeuggeschwindigkeit derart gewählt werden, dass die von den Abstandssensoren durch indirekte Kreuzreflexion empfangenen übersprechenden Messimpulse, die jeweils von den Sendern eines anderen Abstandssensors als der empfangene Abstandssensor oder der dem empfangenen Abstandssensor direkt benachbarten Abstandssensoren ausgesendet wurden, nicht in den Toleranzempfangszeitbereich für die von den Abstandssensoren durch Direktreflexion oder direkte Kreuzreflexion empfangenen Messimpulse fallen, die jeweils von dem eigenen Sender des empfangenen Abstandssensors oder dessen unmittelbar benachbarten Abstandssensoren ausgesendet wurden.

Die Messempfangssignale jeweils desselben Abstandssensors aus der Erstmessung und Verifikationsmessung werden vorzugsweise korreliert, um die durch Direktreflexion und direkte Kreuzreflexion empfangenen Messimpulse zu ermitteln und die Übersprechechos herauszufiltern.

Beispielsweise kann hierzu eine Ermittlung der Laufzeiten der empfangenen Messimpulse und ein Vergleichen der Laufzeiten aus den Messempfangssignalen jeweils desselben Abstandssensors aus der Erstmessung und der Verifikationsmessung erfolgen. Der Abstand zu einem Hindernis wird dann aus den in einem festgelegten Toleranzempfangszeitbereich übereinstimmenden Laufzeiten bestimmt.

Durch den zeitlichen Versatz sind die Laufzeiten der Übersprechechos nämlich vollkommen unterschiedlich, da der Laufzeit der Übersprechechos zusätzlich noch der Zeitversatz überlagert wird. Wenn der zeitliche Versatz größer als der Toleranzempfangszeitbereich gewählt ist, können die Übersprechechos dann aufgrund der unterschiedlichen Laufzeiten leicht als solche erkannt werden, da sie beim Vergleich der Messempfangssignale aus der Erstmessung und Verifikationsmessung nicht in demselben Zeitfenster liegen, der durch den Toleranzempfangszeitbereich festgelegt ist.

Die Erfindung wird nachfolgend anhand der beigefügten Zeichnungen mit Ausführungsbeispielen näher erläutert. Es zeigen:
- Figur 1 -: Skizze eines Kraftfahrzeuges als Draufsicht mit Abstandssensoren an Front und Heck;
- Figur 2 -: beispielhaftes Diagramm eines Messempfangssignals eines Abstandssensors;
- Figur 3 -: Messempfangssignalverlauf für Erstmessung und Verifikationsmessung mit zeitlich versetzten Messimpulsen;
- Figur 4 -: Skizze einer herkömmlichen Abstandsmessung mit Sendegruppe bei sechs Abstandssensoren und den dabei auftretenden Direktreflexionsechos und Kreuzreflexionsechos;
- Figur 5 -: Skizze einer herkömmlichen Abstandsmessung mit Sendegruppe bei vier Abstandssensoren und den dabei auftretenden Direktreflexionsechos und Kreuzreflexionsechos;
- Figur 6 -: Skizze von Abstandssensoren an der Front eines Kraftfahrzeuges mit einem seitlich davon befindlichen Hindernis und der fehlerhaften Erkennung eines weiteren Hindernisses durch Übersprechen aufgrund zu dicht nebeneinander angeordneter Sendegruppen, wobei das Übersprechen als Kreuzreflexionsecho ausgewertet wird;
- Figur 7 -: Skizze von Abstandssensoren an der Front eines Kraftfahrzeuges mit seitlich davor befindlichem Hindernis und der fehlerhaften Erkennung eines weiteren Hindernisses durch Übersprechen aufgrund zu großer Messreichweite; wobei das Übersprechen als Direktreflexionsecho ausgewertet wird;
- Figur 8 -: Skizze von Abstandssensoren an der Front eines Kraftfahrzeuges mit seitlich davor befindlichem Hindernis und der fehlerhaften Erkennung eines weiteren Hindernisses durch Übersprechen aufgrund zu großer Messreichweite, wobei das Übersprechen als Kreuzreflexionsecho ausgewertet wird;
- Figur 9 -: Skizze von Abstandssensoren an der Front eines Kraftfahrzeuges mit einer Begrenzung der Messreichweite;
- Figur 10 -: Skizze Aufteilung von Sendegruppen für sechs Abstandssensoren bei der Anwendung des erfindungsgemäßen Verfahrens;
- Figur 11 -: Skizze der Aufteilung von Sendegruppen für vier Abstandssensoren bei der Anwendung des erfindungsgemäßen Verfaherns.

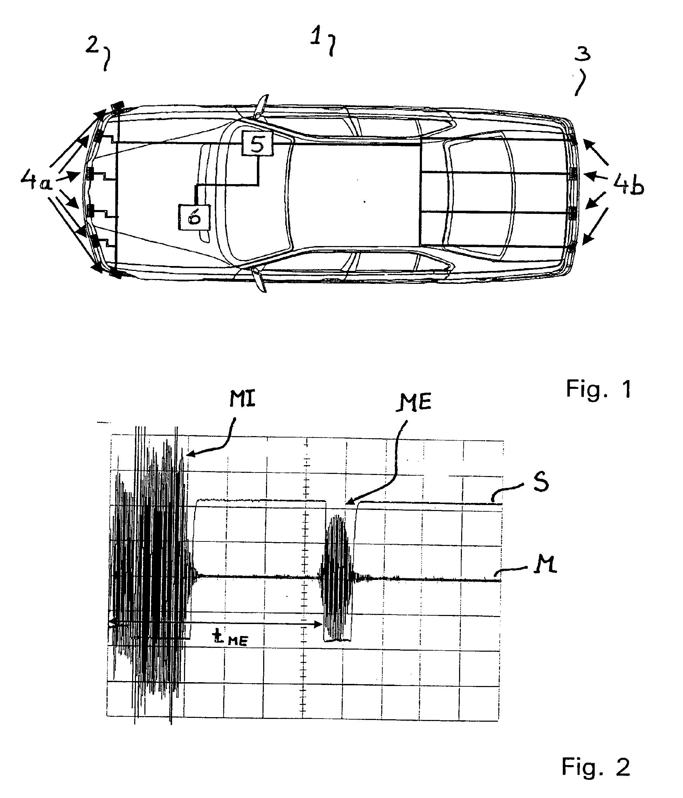

Die Figur 1 lässt eine Skizze eines Kraftfahrzeuges 1 in der Draufsicht erkennen. An der Front 2 und dem Heck 3 sind vorzugsweise in die Stoßstange mehrere Abstandssensoren 4a, 4b, insbesondere Ultraschallsensoren, eingebaut, die jeweils einen Sender zum Aussenden von Messimpulsen MI und einen Empfänger zum Empfangen von Messimpulsechos ME haben. Die Abstandssensoren 4 sind an eine Steuer- und Auswerteeinheit 5 geklemmt, die ihrerseits über ein Bussystem, beispielsweise einen CAN-Bus mit einer zentralen Fahrzeugsteuerung 6 verbunden sein kann. Die Steuer- und Auswerteeinheit 5 dient zur Ansteuerung der Abstandssensoren 4 und Auswertung der Messempfangssignale zur Bestimmung des Abstands zu etwaigen Hindernissen und Weitergabe des Abstands an ein optisches oder akustisches Anzeigesystem, beispielsweise über den CAN-Bus und die zentrale Steuereinheit 6.

Die Figur 2 lässt ein Diagramm eines beispielhaften Messempfangssignals M eines Abstandssensors 4 erkennen. In einer aktiven Sendephase, während der ein Messimpuls MI von dem Sender des Abstandssensors 4 ausgestrahlt wird, wird ein entsprechendes Messimpulssignal MI unmittelbar von dem Empfänger des Abstandssensors 4 wieder empfangen. Nach einer vom Abstand zu einem Hindernis abhängigen Laufzeit t_{ME} wird ein von einem Hindernis direkt reflektiertes Messimpulsecho ME empfangen. Unter Annahme eines festgelegten Schwellwertes wird das vom Empfänger des Abstandssensors 4 empfangene Messempfangssignal M derart ausgewertet, dass ein Schaltsignal S mit möglichst geradlinigen Flanken erzeugt wird. Aus dem Beginn des Schaltsignals S beim Empfang des Messimpulses MI und des Messimpulsechos ME kann dann leicht die Laufzeit t_{ME} und mit Hilfe der bekannten Signalausbreitungsgeschwindigkeit ggf. kompensiert durch die Fahrzeuggeschwindigkeit der Abstand zu dem Hindernis in bekannter Weise ermittelt werden.

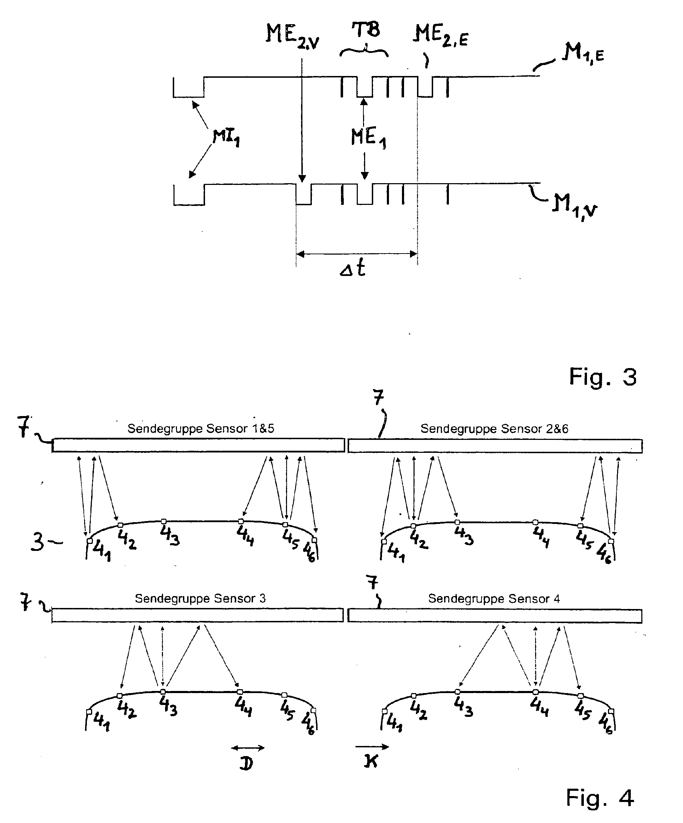

Um eine eindeutige Zuordnung der Messimpulsechos ME zu den sendenden Abstandssensoren 4 für den Fall zu ermöglichen, dass die Empfänger benachbarter Abstandssensoren 4 gleichzeitig aktiv sind und die Sender mehrerer Abstandssensoren 4 annähernd gleichzeitig oder zumindest überlappend Messimpulse MI aussenden, wird nun das Verfahren zur Abstandsmessung gemäß der vorliegenden Erfindung eingesetzt. Ein bei dem erfindungsgemäßen Verfahren gemessenes Messempfangssignal M_{E} für eine Erstmessung und eine Verifikationsmessung M_{V} mit zeitlich versetzten Messimpulsen MI ist in der Figur 3 skizziert.

Das Abstandsmessverfahren erfolgt derart, dass Messimpulse MI₁, MI₂ alternierend durch die mindestens zwei Abstandssensoren 4 für eine Erstmessung E zeitlich versetzt ausgesendet werden, d. h. das Abstandssensoren 4 einer Sendegruppe ihre Messimpulse MI nicht gleichzeitig, sondern nacheinander abstrahlen. Die Messimpulsechos ME werden dann in bekannter Weise durch die Abstandssensoren 4 empfangen. Anschließend erfolgt ein nochmaliges zeitlich versetztes Aussenden von Messimpulsen MI für eine Verifikationsmessung V, wobei der zeitliche Versatz gegenüber der Erstmessung E geändert ist.

Vorzugsweise ist hierzu die Reihenfolge der Messimpulse MI durch die Abstandssensoren 4 bei der Verifikationsmessung V einfach umgekehrt zu der Reihenfolge bei der Erstmessung E gewählt.

In dem dargestellten Beispiel wird ein Messimpuls MI₁ des Senders des Abstandssensors 4, der das dargestellte Messempfangssignal M₁ empfängt, bei Erst- und Verifikationsmessung zu einem angenommenen gleichen Zeitpunkt ausgestrahlt. Für die Erstmessung wird der Messimpuls MI_{2,E} eines anderen Abstandssensors 4 der Sendegruppe zeitversetzt eine kurze Zeit später (beispielsweise 2 msec) ausgestrahlt und entsprechend später nach Kreuzreflexion von dem anderen Abstandssensor 4 empfangen, als das direkt reflektierte Messimpulsecho ME₁ des Messimpulses MI₁ des empfangenen Abstandssensors 4. Das durch Kreuzreflexion empfangene Messimpulsechos ME_{2,E} des Messimpulses MI_{2,E} des anderen Abstandssensors 4 ist als solches mit ME_{2,E} bezeichnet.

Für jedes Messimpulsecho ME wird ein mit schwarzen Balken gekennzeichneter Toleranzempfangszeitbereich TB um das jeweilige Messimpulsechos ME herum festgelegt.

In einer Verifikationsmessung V wird der zeitliche Versatz geändert, beispielsweise indem der Messimpuls MI_{2,V} des anderen Abstandssensors 4 zeitlich vor dem Messimpulse MI_{1,V} des empfangenden Abstandssensors ausgesendet wird (beispielsweise 2 msec vorher). Der zeitliche Versatz Δt beträgt in dem dargestellten Beispiel 4 msec.

Durch Korrelation des bei der Erstmessung E gewonnenen Messempfangssignals M_{1,E} und des bei der Verifikationsmessung V mit geändertem zeitlichen Versatz erhaltenen Messempfangssignals M_{1,V} kann mit Hilfe der Toleranzempfangszeitbereiche TB das direkt reflektierte Messimpulsecho ME₁ erkannt werden. Hierzu wird überprüft, ob im Toleranzempfangszeitbereich TB für ein empfangenes Messimpulsecho ME bei der Erstmessung E ein Messimpulsecho ME bei der Verifikationsmessung V aufgefunden wird.

Die Korrelation kann beispielsweise durch Ermitteln der Laufzeiten der empfangenen Messimpulsechos ME und Vergleichen der Laufzeiten aus den Messempfangssignalen M jeweils desselben Abstandssensors 4 aus der Erstmessung E und der Verifikationsmessung V erfolgen, wobei der Abstand zu einem Hindernis aus den in dem festgelegten Toleranzempfangszeitbereich TB übereinstimmenden Laufzeiten bestimmt wird. Eine absolute Gleichzeit der Laufzeiten wird daher nicht vorausgesetzt, sondern lediglich eine Vergleichbarkeit innerhalb einer durch den Toleranzempfangszeitbereich TB festgelegten Toleranz.

Im Folgenden wird das Verfahren für die Anwendung als Einparkhilfe bei Kraftfahrzeugen unter Berücksichtigung von Sendegruppen detaillierter dargestellt.

Die Figur 4 lässt eine Skizze der Front 3 eines Kraftfahrzeuges mit sechs Abstandssensoren 4₁, 4₂, 4₃, 4₄, 4₅, und 4₆ erkennen, die beispielsweise in die Stoßstange des Kraftfahrzeuges eingebaut sind. Bei dem skizzierten herkömmlichen Verfahren werden die Abstandssensoren 4 in Sendegruppen parallel betrieben, d. h. Messimpulse MI der einzelnen Sendegruppen annähernd gleichzeitig ausgesandt. Die mit beiseitigen Pfeil versehenen Linien zeigen hierbei Direktreflexionsechos D, d. h. Messimpulsechos ME, die von dem Sender eines Abstandssensors 4 ausgesandt und von dem Empfänger desselben Abstandssensors 4 nach direkter Reflexion an einem Hindernis 7 wieder empfangen werden.

Die einseitig gerichteten Pfeillinien hingegen stellen Kreuzreflexionsechos K dar, die als Messimpulse MI eines ersten Abstandssensors 4 nach Reflexion durch das Hindernis 7 oder im Ausnahmefall möglicherweise auch durch direktes Übersprechen von dem Empfänger eines anderen Abstandssensors 4 empfangen werden.

Aus der Figur 1 ist erkennbar, dass zunächst die Sendegruppe mit den Abstandssensoren 4₁ und 4₅ Messimpulse MI gleichzeitig aussenden. Diese Abstandssensoren 4₁, 4₅ messen dann die Messimpulsechos ME als Direktreflexionsechos D. Der dem sendenden Abstandssensor 4₁ benachbarte Abstandssensor 4₂ empfängt zudem ein direktes Kreuzreflexionsecho K. Ebenso empfangen die dem sendenden Abstandssensor 4₅ benachbarten Abstandssensoren 4₄ und 4₆ direkte Kreuzreflexionsechos K des von dem Abstandssensor 4₅ ausgestrahlten Messimpulses MI.

Da bekannt ist, dass lediglich die weit voneinander entfernten Abstandssensoren 4₁ und 4₅ aktiv senden, kann sichergestellt werden, dass kein Übersprechen zwischen den beiden sendenden Abstandssensoren 4₁ und 4₅ erfolgt.

Anschließend wird die Sendegruppe mit den Abstandssensoren 4₂ und 4₆ aktiviert. Auch hier ist der Abstand zwischen den sendenden Abstandssensoren 4₂, 4₆ ausreichend groß, dass ein Übersprechen nicht stattfindet.

Für die nachfolgende Aktivierung des Abstandssensors 4₃ kann jedoch kein ausreichender Abstand zu einem weiter möglicherweise zu aktivierenden Abstandssensor 4 sichergestellt werden. Der Abstandssensor 4₃ wird daher alleine betrieben. Gleiches gilt für die spätere Aktivierung des Abstandssensors 4₄.

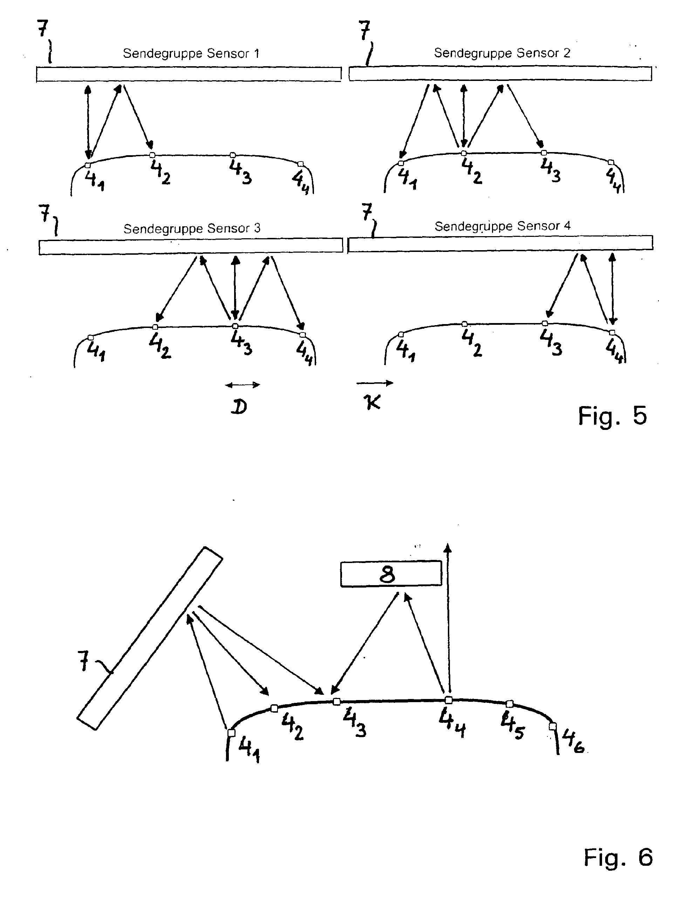

In entsprechender Weise zeigt die Figur 5 eine herkömmliche Abstandsmessung mit Sendegruppen bei vier Abstandssensoren 4₁, 4₂, 4₃ und 4₄ und den dabei auftretenden Direktreflexionsechos D und Kreuzreflexionsechos K dargestellt. Aufgrund der Abstände der Abstandssensoren 4 zueinander kann ein Übersprechen nie ausgeschlossen werden, so dass die Abstandssensoren 4₁, 4₂, 4₃, und 4₄ bei der Erst- und Verifikationsmessung jeweils einzeln aktiviert werden. Bei einer Erstmessung E und einer Verifikationsmessung V sendet somit jeweils nur ein einziger Abstandssensor 4. Dies hat nachteilig eine relativ große Reaktionszeit zur Folge.

Wenn nun, wie in der Figur 6 dargestellt relativ nah zueinander beabstandet Abstandssensoren 4 gleichzeitig Messimpulse MI aussenden, kann es beispielsweise bei seitlichem Hindernis 7 zu Kreuzreflexionsechos K kommen, die fehlinterpretiert werden.

Die von dem Abstandssensor 4₃ empfangenen Messimpulsechos ME werden herkömmlicherweise dem direkt benachbarten sendenden Abstandssensor 4₄ zugeordnet. Hierdurch wird ein Pseudo-Hindernis 8 erkannt, das tatsächlich aber nicht existiert. Vielmehr hat der Abstandssensor 4₃ ein Kreuzreflexionsecho K von dem ebenfalls sendenden Abstandssensor 4₁ empfangen, das bezogen auf den sendenden Abstandssensor 4₄ ein Übersprechecho darstellt. Es wird also deutlich, dass die Sendegruppen nicht zu dicht nebeneinander liegen dürfen, um eine zuverlässige Einparkhilfe zu realisieren.

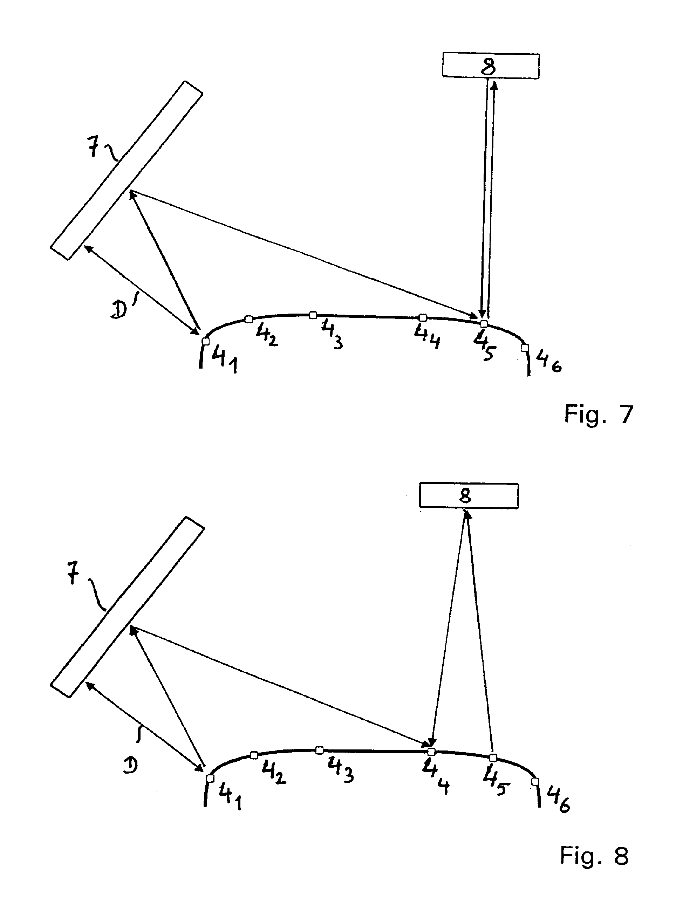

Die Figuren 7 und 8 lassen das herkömmliche Verfahren erkennen, wobei ein Übersprechen innerhalb von Sendegruppen bei zu großen Messreichweiten erfolgt. Das tatsächliche Hindernis 7 wird von dem sendenden Abstandssensor 4₁ aus dem Direktreflexionsecho D korrekt erkannt. Aufgrund der großen Messreichweite wird der von dem Abstandssensor 4₁ gesendete Messimpuls MI durch das Hindernis 7 bis zu dem Abstandssensor 4₅, wie in der Figur 7 gezeigt, oder dem Abstandssensor 4₄, wie in der Figur 8 gezeigt, reflektiert. Da zusätzlich auch der Abstandssensor 4₅ (Figur 7) aktiv ist und Messimpulse MI aussendet, wird das von dem Abstandssensor 4₁ resultierende übersprechende Kreuzreflexionsecho K durch den Abstandssensor 4₅ als Direktreflexionsecho D interpretiert und ein tatsächlich nicht existierendes Pseudo-Hindernis 8 erkannt.

In entsprechender Weise kann, wie in der Figur 8 skizziert ist, das übersprechende Kreuzreflexionsecho K, das von dem Messimpuls MI des Abstandssensors 4₁ resultiert, von dem Abstandssensor 4₄ als direktes Kreuzreflexionsecho K des Abstandssensors 4₅ interpretiert werden, was gleichermaßen zu einer fehlerhaften Erkennung eines tatsächlich nicht existierenden Pseudo-Hindernisses 8 führt.

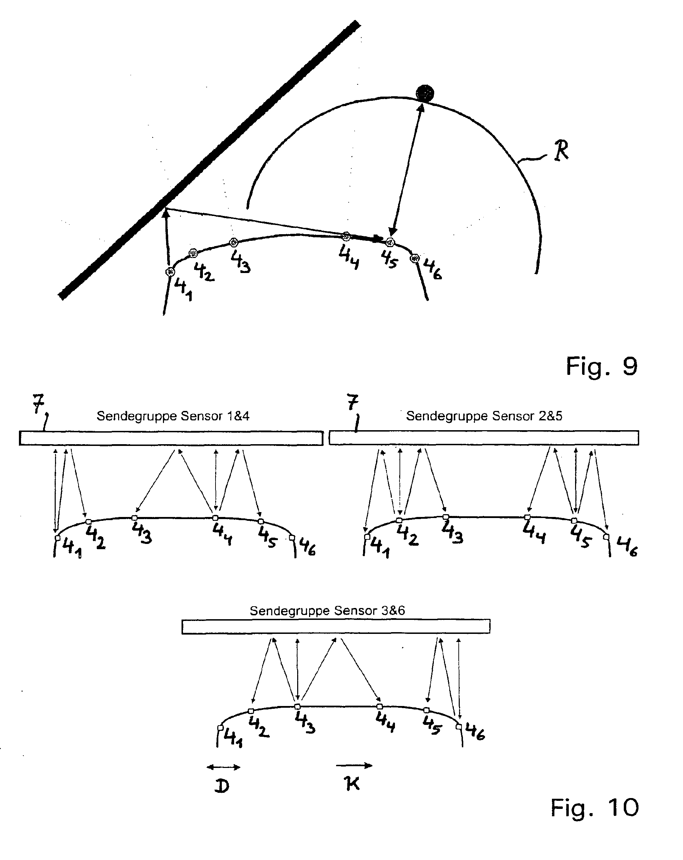

Die Figur 9 lässt eine Skizze von Abstandssensoren 4 an der Front eines Kraftfahrzeuges mit einer Begrenzung der Messreichweite R erkennen. Wenn der Messbereich der äußeren Abstandssensoren, beispielsweise des Abstandssensors 4₅, fahrzeugspezifisch begrenzt ist, können übersprechende Kreuzreflexionsechos K mit längerer Laufzeit als Fehlsignale ausgeschlossen werden. Die Begrenzung der Messreichweite R hat jedoch den Nachteil, dass Hindernisse unter Umständen zu spät erkannt werden.

Bei dem Verfahren gemäß der vorliegenden Erfindung als Einparkhilfe können die oben detailliert beschriebenen Probleme gelöst werden, in dem die Abstandssensoren 4 innerhalb einer Sendegruppe nicht gleichzeitig, sondern zeitversetzt senden und bei der Wiederholungsmessung zur Verifizierung die Abstandssensoren 4 dann mit einem geänderten zeitlichen Versatz senden. Der Zeitversatz beträgt daher vorzugsweise nur einen Bruchteil der Zeit, die ein Abstandssensor 4 für eine Messung benötigt.

Die Figur 10 lässt im Vergleich zu Figur 4 eine Skizze zur Aufteilung von Sendegruppen für sechs Abstandssensoren 4 bei der Anwendung des erfindungsgemäßen Verfahrens erkennen. Es wird deutlich, dass durch den geänderten zeitlichen Versatz bei Erstmessung E und Verifikationsmessung V der Abstand der gleichzeitig aktiven Sendegruppen verringert werden kann. In einem ersten Schritt können die Abstandssensoren 4₁ und 4₄ senden, wobei ein Hindernis aus den Direktreflexionsechos D und direkten Kreuzreflexionsechos K relativ genau lokalisiert werden kann. Anschließend werden die Abstandssensoren 4₂ und 4₅ als Sendegruppe aktiviert und darauf folgt die Aktivierung der Abstandssensoren 4₃ und 4₆.

Durch den zeitlichen Versatz beim Senden der Messimpulse MI durch die Abstandssensoren 4 einer Sendegruppe, d. h. der Abstandssensoren 4₁ und 4₄ im ersten Schritt, der Abstandssensoren 4₂ und 4₅ im zweiten Schritt und der Abstandssensoren 4₃ und 4₆ im dritten Schritt, können die Direktreflexionsechos D und direkten Kreuzreflexionsechos K mit Hilfe der Toleranzempfangszeitbereich TB eindeutig den sendenden Abstandssensoren 4 zugeordnet werden.

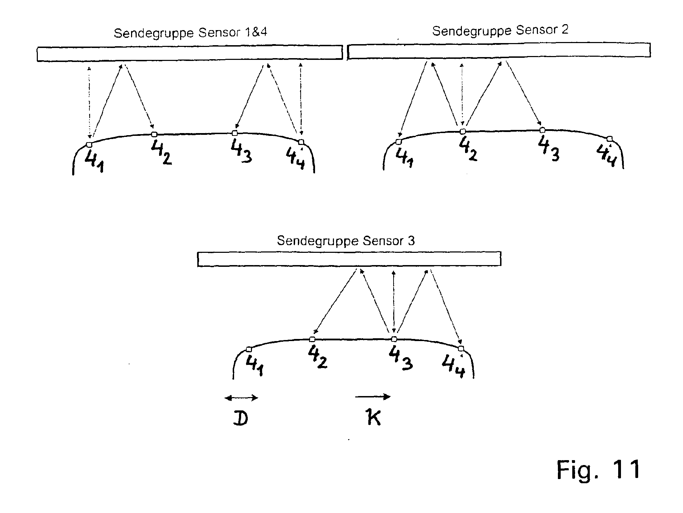

In entsprechender Weise zeigt die Figur 11 die Aufteilung von Sendegruppen für vier Abstandssensoren 4 bei der Anwendung des erfindungsgemäßen Verfahrens. Im Vergleich zur Figur 5 wird deutlich, dass nunmehr im ersten Schritt die Abstandssensoren 4₁ und 4₄ in einer Sendegruppe zusammen aktiviert werden können, wobei die Messimpulse durch die Abstandssensoren 4₁ und 4₄ mit zeitlichem Versatz zueinander ausgesendet werden.

Lediglich bei den nachfolgenden Messungen werden die Abstandssensoren 4₂ und 4₃ einzeln aktiviert.

## Patentansprüche

1. Verfahren zur Abstandsmessung mit mindestens zwei berührungslosen Abstandssensoren (4), insbesondere mit Ultraschallsensoren, die jeweils einen Sender zur Aussendung von Messimpulsen (MI) und einen Empfänger zum Empfang von Messimpulsechos (ME) haben, wobei aus der Zeitdifferenz (t_{ME}) zwischen Messimpuls (MI) und empfangenem Messimpulsecho (ME) der Abstand zu einem den Messimpuls (MI) reflektierenden Hindernis (7) bestimmt wird, **gekennzeichnet durch**zeitlich versetztes Aussenden jeweils eines Messimpulses (MI_{1,E}, MI_{2,E}) durch einen ersten und einen zweiten Abstandssensor (4) für eine Erstmessung, durch Empfangen der Messimpulsechos (ME_{1,E}, ME_{2,E}) durch den ersten Abstandssensor (4), durch Festlegen jeweils eines Toleranzempfangszeitbereiches (TB) um die empfangenen Messimpulsechos, durch
nochmaliges zeitlich versetztes Aussenden jeweils eines Messimpulses (MI_{1,V}, MI_{2,V}) durch den ersten und den zweiten Abstandssensor (4) mit einem gegenüber der Erstmessung geändertem zeitlichen Versatz (Δt) zwischen dem vom ersten bzw. zweiten Abstandssensor gesendeten Messimpuls für eine Verifikationsmessung und
durch eine Korrelation eines bei der Erstmessung gewonnen Messempfangssignals (MI_{I,E}) und eines bei der Verifikationsmessung empfangenen Messempfangssignals (MI_{I,V}) derart, dass ein direkt reflektiertes Messimpulsechos dann erkannt wird, wenn es bei der Verifikationsmessung in einem Toleranzempfangszeitbereich (TB) empfangen wird.

2. Verfahren nach Anspruch 1, **dadurch gekennzeichnet, dass** die Reihenfolge der Aussendungen der Messimpulse (MI) durch die Abstandssensoren (4) bei der Verifikationsmessung umgekehrt zu der Reihenfolge bei der Erstmessung ist.

3. Verfahren nach einem der vorhergehenden Ansprüche, **dadurch gekennzeichnet, dass** die Versatzzeit (Δt) zwischen dem zeitlich versetzten Aussenden aufeinander folgender Messimpulse (MI) in Abhängigkeit von der Zeitdauer zwischen Erstmessung und Verifikationsmessung gewählt ist.

4. Verfahren nach einem der vorhergehenden Ansprüche zur Abstandsmessung in Kraftfahrzeugen, insbesondere zur Einparkhilfe, **dadurch gekennzeichnet, dass** der zeitliche Versatz (Δt) in Abhängigkeit von der Fahrzeuggeschwindigkeit derart gewählt ist, dass die von den Abstandssensoren (4) durch übersprechende Kreuzreflexion empfangenen Messimpulse (MI, K), die jeweils von dem Sender eines anderen Abstandssensors (4) als der empfangende Abstandssensor (4) oder der dem empfangenden Abstandssensor (4) direkt benachbarten Abstandssensoren (4) ausgesendet wurden, nicht in den Toleranzempfangszeitbereich (TB) für die von den Abstandssensoren (4) durch Direktreflexion oder direkte Kreuzreflexion empfangenen Messimpulse (MI, D) fallen, die jeweils von dem eigenen Sender des empfangenen Abstandssensors (4) oder dessen unmittelbar benachbarten Abstandssensoren (4) ausgesendet wurden.

5. Verfahren nach einem der vorhergehenden Ansprüche, **gekennzeichnet durch** Korrelation der Messempfangssignale (M) jeweils desselben Abstandssensors (4) aus der Erstmessung und Verifikationsmessung zur Ermittlung der **durch** Direktreflexion oder direkter Kreuzreflexion empfangenen Messimpulse (MI, D) und Filterung der **durch** übersprechende Kreuzreflexion empfangenen Messimpulse (MI, K).

6. Verfahren nach einem der vorhergehenden Ansprüche, **gekennzeichnet durch** Ermitteln der Laufzeiten der empfangenen Messimpulsechos (ME), Vergleichen der Laufzeiten aus den Messempfangssignalen (M) jeweils desselben Abstandssensors (4) aus der Erstmessung und der Verifikationsmessung, und Bestimmen des Abstands zu einem Hindernis (7) aus den in dem festgelegten Toleranzempfangszeitbereich (TB) übereinstimmenden Laufzeiten.

7. Messeinrichtung zur Abstandsmessung mit mindestens zwei berührungslosen Abstandssensoren (4), insbesondere mit Ultraschallsensoren, die jeweils einen Sender zur Aussendung von Messimpulsen (MI) und einen Empfänger zum Empfangen von Messimpulsechos (ME) haben, und mit einer an die Abstandssensoren (4) angeschlossenen Steuer- und Auswerteeinheit (5), **dadurch gekennzeichnet, dass** die Steuer- und Auswerteeinheit (5) zur Durchführung des Verfahrens nach einem der vorhergehenden Ansprüche ausgebildet ist.

## Claims

1. Method for measuring distances having at least two contactless distance sensors (4), in particular having ultrasonic sensors which each have a transmitter for emitting measurement pulses (MI) and a receiver for receiving measurement pulse echoes (ME), the distance from an obstacle (7) which reflects the measurement pulse (MI) being determined from the time difference (t_{ME}) between the measurement pulse (MI) and the received measurement pulse echo (ME), **characterized by** chronologically offset emission of in each case one measurement pulse (MI_{1,E}, MI_{2,E}) by a first and a second distance sensor (4) for an initial measurement, by receiving the measurement pulse echo (ME₁,_{E}, ME₂,_{E}) by means of the first distance sensor (4), by defining in each case a tolerance reception time period (TB) around the received measurement pulse echoes, by a further, chronologically offset emission of in each case one measurement pulse (MI_{1,V}, MI_{2,V}) by the first and second distance sensors (4) with a chronological offset (Δt), changed compared to the initial measurement, between the measurement pulse transmitted by the first and second distance sensors, respectively, for verification measurement, and by correlating a measurement reception signal (MI_{1,E}) which is acquired during initial measurement and a measurement reception signal (MI_{1,V}) which is received during the verification measurement, such that a directly reflected measurement pulse echo is detected if it is received in a tolerance reception time period (TB) during the verification measurement.

2. Method according to Claim 1, **characterized in that** the sequence of emissions of the measurement pulses (MI) by the distance sensors (4) during the verification measurement is inverted compared to the sequence during the initial measurement.

3. Method according to one of the preceding claims, **characterized in that** the offset time (Δt) between the chronologically offset emission of successive measurement pulses (MI) is selected as a function of the period of time between the initial measurement and verification measurement.

4. Method according to one of the preceding claims for measuring distances in motor vehicles, in particular for providing parking assistance, **characterized in that** the chronological offset (Δt) is selected as a function of the speed of the vehicle in such a way that the measurement pulses (MI, K), which are received by the distance sensors (4) by means of crosstalk cross reflection and have each been emitted by the transmitter of another distance sensor (4) as the receiving distance sensor (4) or the distance sensors (4) which are directly adjacent to the received distance sensor (4), do not occur in the tolerance reception time period (TB) for the measurement pulses (MI, D) which are received by the distance sensors (4) by direct reflection or direct cross reflection and have each been emitted by the received distance sensor's (4) own transmitter or its distance sensors (4) which are directly adjacent.

5. Method according to one of the preceding claims, **characterized by** correlation of the measurement reception signals (M) of the same distance sensor (4) in each case, from the initial measurement and verification measurement in order to determine the measurement pulses (MI, D) received by direct reflection or direct cross reflection and filtering of the measurement pulses (MI, K) received by crosstalk cross reflection.

6. Method according to one of the preceding claims, **characterized by** determining the transit times of the received measurement pulse echoes (ME), comparing the transit times from the measurement reception signals (M) of the same distance sensor (4) in each case, from the initial measurement and the verification measurement, and determining the distance from an obstacle (7) from the transit times which correspond in the defined tolerance reception time period (TB).

7. Measuring device for measuring distances, having at least two contactless distance sensors (4), in particular having ultrasonic sensors, which each have a transmitter for emitting measurement pulses (MI) and a receiver for receiving measurement pulse echoes (ME), and having a control and evaluation unit (5) which is connected to the distance sensors (4), **characterized in that** the control and evaluation unit (5) is designed to carry out the method according to one of the preceding claims.

## Revendications

1. Procédé pour mesurer des distances, avec au moins deux capteurs de distance (4) sans contact, en particulier avec des capteurs à ultrasons comportant respectivement un émetteur pour envoyer des impulsions de mesure (MI) et un récepteur pour recevoir des échos d'impulsions de mesure (ME), selon lequel à partir de la différence de temps (t_{ME}) entre impulsion de mesure (MI) et écho d'impulsion de mesure reçu (ME), on détermine la distance à un obstacle (7) réfléchissant l'impulsion de mesure (MI),
**caractérisé par**
- l'envoi temporellement décalé respectivement d'une impulsion de mesure (MI_{1,E}, MI_{2,E}) par un premier et un deuxième capteur de distance (4) pour une mesure initiale,
- la réception des échos des impulsions de mesure (ME_{1,E}, ME_{2,E}) par le premier capteur de distance (4),
- la fixation d'une plage de tolérance du temps de réception (TB) autour des échos des impulsions de mesure,
- un nouvel envoi temporellement décalé d'une impulsion de mesure (MI_{1,V}, MI_{2,V}) par le premier et le deuxième capteur de distance (4) avec un décalage temporel (Δt) modifié par rapport à la mesure initiale, entre l'impulsion de mesure envoyée par le premier et le deuxième capteur de distance, pour une mesure de vérification, et
- une corrélation d'un signal de réception de mesure (ME_{1,E}) obtenu à la mesure initiale et d'un signal de réception de mesure (ME_{1,V}) reçu à la mesure de vérification, de sorte qu'on détecte un écho d'impulsion de mesure directement réfléchi lorsqu'il est reçu, lors de la mesure de vérification, dans une plage de tolérance du temps de réception (TB).

2. Procédé selon la revendication 1,
**caractérisé en ce que**
la séquence des envois des impulsions de mesure (MI) par les capteurs de distance (4) lors de la mesure de vérification est l'inverse de la séquence à la mesure initiale.

3. Procédé selon l'une des revendications précédentes,
**caractérisé en ce qu'**
on choisit le temps de décalage (Δt) entre l'envoi temporellement décalé d'impulsions de mesure (MI) consécutives en fonction de la durée entre mesure initiale et mesure de vérification.

4. Procédé selon l'une des revendications précédentes pour mesurer des distances dans des véhicules automobiles, en particulier pour aider au stationnement,
**caractérisé en ce qu'**
on choisit le décalage temporel (Δt) en fonction de la vitesse du véhicule, de sorte que les impulsions de mesure (MI, K) reçues par les capteurs de distance (4) par réflexion croisée en diaphonie, qui ont été envoyées respectivement par l'émetteur d'un autre capteur de mesure (4) en tant que le capteur de mesure recevant (4) ou le capteur de mesure (4) directement adjacent au capteur de mesure recevant (4), ne tombent pas dans la plage de tolérance du temps de réception (TB) pour les impulsions de mesure (MI, D) reçues des capteurs de distance (4) par réflexion directe ou réflexion croisée directe, lesquelles ont été envoyées respectivement par le propre émetteur du capteur de distance recevant (4) ou son capteur de mesure (4) directement adjacent.

5. Procédé selon l'une des revendications précédentes,
**caractérisé par**
la corrélation des signaux de réception de mesures (M) respectivement du même capteur de mesure (4), provenant de la mesure initiale et de la mesure de vérification, pour déterminer les impulsions de mesure (MI, D) reçues par réflexion directe ou réflexion croisée directe et pour filtrer les impulsions de mesure (MI, K) reçues par réflexion croisée en diaphonie.

6. Procédé selon l'une des revendications précédentes,
**caractérisé par**
la détermination des durées des échos des impulsions de mesure (ME) reçus, la comparaison des durées à partir des signaux de réception de mesures (M) respectivement du même capteur de distance (4) à partir de la mesure initiale et de la mesure de vérification, et la détermination de la distance à un obstacle (7) à partir des durées concordant dans la plage de tolérance du temps de réception définie (TB).

7. Dispositif de mesure pour mesurer des distances, avec au moins deux capteurs de distance (4) sans contact, en particulier avec des capteurs à ultrasons comportant respectivement un émetteur pour envoyer des impulsions de mesure (MI) et un récepteur pour recevoir des échos d'impulsions de mesure (ME), et avec une unité de commande et d'exploitation (5) raccordée aux capteurs de distance (4),
**caractérisé en ce que**
l'unité de commande et d'exploitation (5) est conçue pour réaliser le procédé selon l'une des revendications précédentes.
